# EUROPÄISCHE PATENTANMELDUNG

(11) **EP 3 128 381 A1**
(43) Veröffentlichungstag der Anmeldung: **08.02.2017**
(21) Anmeldenummer: 15179492.2
(22) Anmeldetag: 03.08.2015
(51) Int. Cl.: G05B 19/042

(54) **VERFAHREN ZUM BETREIBEN EINES ENGINEERING-SYSTEMS SOWIE ENGINEERING-SYSTEM**

(71) Anmelder: Siemens Aktiengesellschaft, 80333 München (DE)
(72) Erfinder: Drumm, Oliver, 76344 Eggenstein-Leopoldshafen (DE); Lutz, Benjamin, 76327 Pfinztal (DE); Wolf, Gerrit, 76187 Karlsruhe (DE)

(57) **Zusammenfassung**

Die Erfindung betrifft ein Verfahren zum Betreiben eines Engineering-Systems, welches ein Software-Werkzeug zum Festlegen einer Vielzahl von Komponenten (2 bis 9) einer zu steuernden Anlage im Rahmen einer Anlagenplanung aufweist, wobei die Komponenten (2 bis 9) und verfahrenstechnischen Abläufe in einem auf einer Anzeigeeinheit darstellbaren Diagramm (1) abgebildet werden. Es werden geeignete Maßnahmen vorgeschlagen, mittels derer ein Verfahrenstechniker einem Automatisierungstechniker "abstrakte" Schrittketten zur Verfügung stellt, welche der Automatisierungstechniker im Sinne der Automatisierung weiterverarbeiten und optimieren kann.

## Beschreibung

Die Erfindung betrifft ein Verfahren zum Betreiben eines Engineering-Systems, welches ein Software-Werkzeug zum Festlegen einer Vielzahl von Komponenten einer zu steuernden Anlage im Rahmen einer Anlagenplanung aufweist, wobei die Komponenten und verfahrenstechnischen Abläufe in einem auf einer Anzeigeeinheit darstellbaren Diagramm abgebildet werden. Ferner betrifft die Erfindung ein Engineering-System gemäß dem Oberbegriff des Anspruchs 3.

Im Rahmen der Projektierung einer Automatisierungseinrichtung, insbesondere für eine Automatisierungseinrichtung zur Steuerung verfahrenstechnischer Anlagen, wird in der Regel ein bibliotheksbasierter Typ-Instanz-Ansatz für Automatisierungsfunktionen verwendet. Dazu werden vorgefertigte Komponenten bzw. Bausteine zum Automatisierungs- bzw. Steuerprogramm (Anwenderprogramm) verschaltet, welches auf einer Steuerung bzw. auf einem Automatisierungsgerät (speicherprogrammierbare Steuerung (SPS), Programmable Logic Controller (PLC)) der Automatisierungseinrichtung abläuft. Derartige Komponenten sind beispielsweise so genannte CFCs ("Continuous Function Charts), welche die Automatisierung einzelner Anlagenteile sowie Messstellen verwirklichen bzw. repräsentieren. Darüber hinaus werden so genannte SFCs (Sequential Function Charts) verwendet, welche auf dem Prinzip "Zustand-Transition" basieren und welche die CFCs zu komplexen Automatisierungsabläufen "zusammenschalten".

Derartige CFCs und SFCs sind aus dem Siemens-Katalog "Prozessleitsystem SIMATIC PCS 7, Ausgabe 2014/15, Kapitel 4, bekannt. Mittels eines auf einem Engineering-System ablauffähigen grafischen Editors in Form eines "Continuous Function Chart (CFC)-Editors", erstellt ein Automatisierungstechniker aus vorgefertigten Bausteinen (Objekten) nach Maßgabe einer zu lösenden Automatisierungsaufgabe eine Automatisierungslösung bzw. ein Anwender- oder Steuerprogramm für ein Automatisierungsgerät. Dazu wählt der Anwender die Bausteine bzw. Objekte, z. B. einen Regler- oder Zähler-Baustein aus einem verfügbaren Bausteinvorrat aus, platziert die Bausteine z. B. per Drag&Drop in einem Funktionsplan (z. B. CFC-Plan) und verschaltet diese per Mausklick miteinander, wobei aufgrund der Platzierung der Bausteine automatisch eine Instanz des jeweiligen Bausteins erzeugt wird. Unter dem Begriff "verschalten" wird verstanden, dass z. B. für die Kommunikation zwischen den Bausteinen Werte von einem Ausgang zu einem oder mehreren Eingängen übertragen werden. Nachdem der Anwender alle Funktionen im Funktionsplan erstellt hat, erzeugt das Engineering-System mittels des Automatisierungsgerätes lesbare CFC-Automatisierungsobjekte bzw. CFC-Funktionen, die in dieses Automatisierungsgerät geladen und dort im Rahmen der Steuerung eines technischen Prozesses bzw. zur Lösung der Automatisierungsaufgabe verarbeitet werden.

Ferner ist das Engineering-System mit einem weiteren grafischen Editor in Form eines so genannten "Sequential Function Chart (SFC)-Editors" (Schrittketten-Editor) versehen, mittels welchem ein Anwender eine Ablaufsteuerung bzw. ein Rezept zur Steuerung eines Chargenprozesses (Batchprozesses) erstellen kann, beispielsweise ein Rezept zur Herstellung von Kunstharz, Farbstoffen oder Düngemitteln. Dieser SFC-Editor ermöglicht eine grafische Projektierung und Inbetriebnahme der Ablaufsteuerung, wobei aus der Ablaufsteuerung (SFC)Objekte erzeugt werden, die in ein Automatisierungsgerät geladen und dort ausgeführt werden. Diese Ablaufsteuerung ist für eine zustandsgesteuerte oder ereignisgesteuerte Ausführung von Produktionsprozessen auf Basis von Ablaufketten (Schrittketten) vorgesehen. Die Ablaufsteuerung weist gewöhnlich eine Vielzahl derartiger Schrittketten (Sequential Function Charts) auf, die unverzweigt und/oder alternativ- und/oder parallelverzweigt ausgebildet sind und die jeweils mehrere Rezeptelemente in Form von Rezeptoperationen oder Rezeptfunktionen, z. B. Dosieren, Heizen oder Rühren, sowie Transitionen umfassen. Die aus der Ablaufsteuerung bzw. aus den Schrittketten (SFC) erzeugten (SFC)Objekte steuern im Run-Betrieb des oder der Automatisierungsgeräte die aus dem CFC-Plan erzeugten CFC-Funktionen, d. h. die SFC-Objekte parametrieren und aktivieren die untergeordneten CFC-Funktionen, wobei über Prozesswerte und Steuersignale die Interaktion und Verknüpfung zwischen den SFC-Objekten und den CFC-Funktionen bewerkstelligt werden.

Aus dem Siemens-Bedienhandbuch "COMOS Process P&ID, Ausgabe 2014, ist ein Software-Modul "P&ID (Piping and Instrumentation Diagram)" bekannt, mittels dem ein Verfahrenstechniker mit integrierter intelligenter Symboltechnik Rohrleitungsund Instrumentierungsschemata erstellen und verfahrenstechnische und rohrleitungstechnische Abläufe abbilden kann. Im Rahmen einer Anlagenplanung bezüglich der verfahrenstechnischen Anforderungen einer Anlage erstellt der Verfahrenstechniker ein P&ID-Diagramm, in welchem er einer Vielzahl von Apparaten, Sensoren, Aktoren und Rohrverbindungen einer zu steuernden Anlage festlegt. Dieses von dem Verfahrenstechniker erstellte Diagramm bildet für den Automatisierungstechniker die Grundlage zur Erstellung der CFC- und SFC-Pläne eines Automatisierungs- bzw. Steuerprogramms für die Automatisierungseinrichtung. Dabei kann es vorkommen, dass der Automatisierungstechniker das Diagramm oder Teile des Diagramms falsch interpretiert und dadurch der Automatisierungstechniker ein fehlerbehaftetes Steuerprogramm erstellt.

Der Erfindung liegt daher die Aufgabe zugrunde, ein Verfahren der eingangs genannten Art anzugeben, mittels welchem derartige Nachteile vermieden werden. Darüber hinaus ist ein Engineering-System gemäß dem Oberbegriff des Anspruchs 2 zu schaffen, welches zur Durchführung des Verfahrens geeignet ist.

Diese Aufgabe wird im Hinblick auf das Verfahren durch die im kennzeichenenden Teil des Anspruchs 1 angegebenen, bezüglich des Engineering-Systems durch die im kennzeichnenden Teil des Anspruchs 3 angegebenen Maßnahmen gelöst.

Vorteilhaft ist, dass der Verfahrenstechniker dem Automatisierungstechniker bereits "abstrakte" Schrittketten zur Verfügung stellt, welche der Automatisierungstechniker im Sinne der Automatisierung weiterverarbeiten und optimieren kann. Der Automatisierungstechniker braucht zur Erstellung der "automatisierungstechnischen" Schrittkette für ein Steuerprogramm das P&ID-Diagramm nicht mehr auszuwerten und zu interpretieren, wodurch eine potentielle Fehlerquelle eliminiert wird. Die abstrakten Schrittketten dienen als Grundlage für eine automatisierungstechnische Detaillierung durch den Automatisierungstechniker und bilden die Basis für die Integration von verfahrens- und automatisierungstechnischen Arbeiten.

Eine "abstrakte" bzw. "verfahrenstechnische" Schrittkette ist unabhängig von einer konkreten Automatisierungs-Hardware. Beispielsweise sind die Verstärkungsfaktor-Anteile eines so genannten PID-Regler-Bausteins von verfahrenstechnischer Relevanz, wobei ein proportionaler Anteil, ein integraler Anteil und ein differenzieller Anteil in hohem Maße von der Regelstrecke (Baustein "Prozess"), also von dem zu regelnden verfahrenstechnischen Anlagenteil abhängen. Dagegen sind bei dem genannten PID-Regler insbesondere Signalqualität (Quality-Code), Übertragungseigenschaft - z. B. die Übertragungseigenschaft von einem Automatisierungsgerät zu einer Bedienund Beobachtungsstation - und automatisierungsgerätspezifische Parameter an den Baustein-Ein- und/oder Ausgängen (Operations-Bausteinnummern, Zykluszeit) von automatisierungstechnischer Relevanz.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Darstellung
- Figur 1: ein P&ID-Diagramm mit dargestellten Zuständen und Kommandos,
- Figur 2: ein P&ID-Diagramm und Elemente einer Schrittkette,
- Figur 3: Elemente einer abstrakten Schrittkette mit angezeigten Zuständen,
- Figur 4: Elemente einer abstrakten Schrittkette mit angezeigten Kommandos,
- Figur 5: eine abstrakte Schrittkette,
- Figur 6: ein P&ID-Diagramm und
- Figur 7: eine Schrittkette.

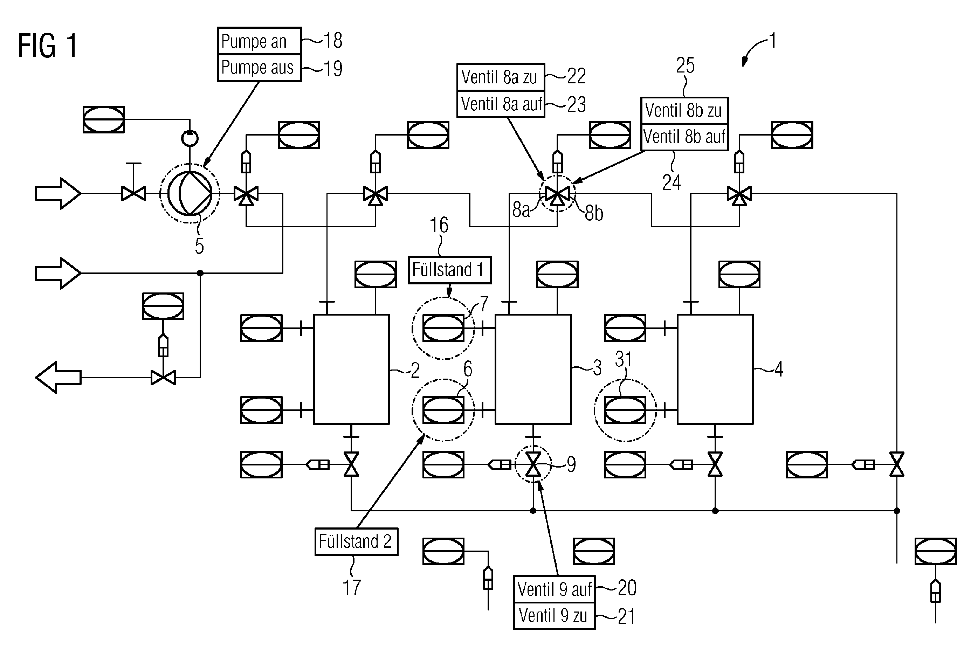

Die in den Figuren 1 bis 7 dargestellten gleichen Teile sind mit gleichen Bezugszeichen versehen.

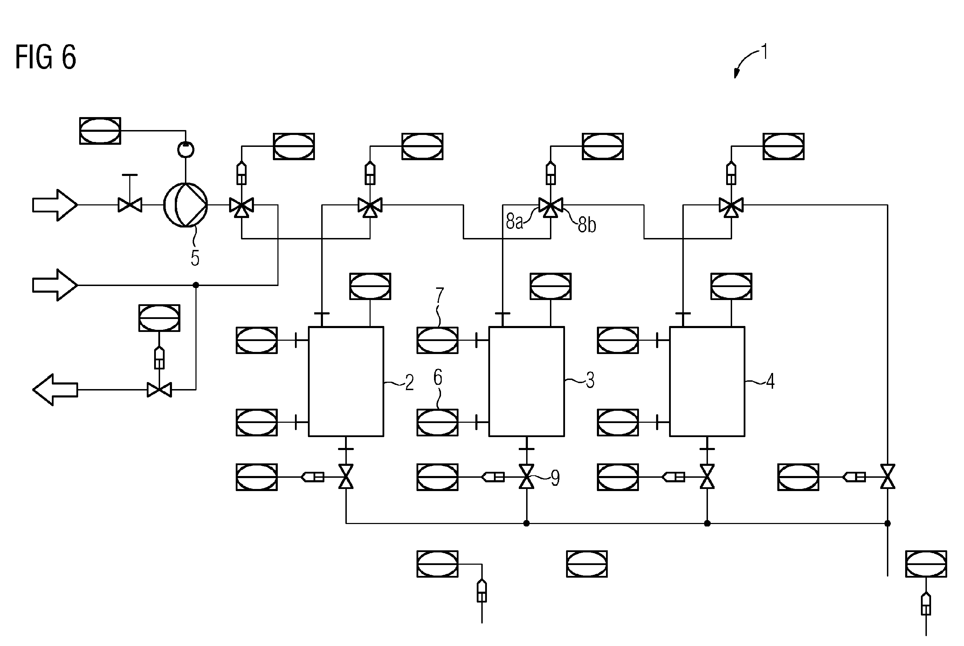

Es wird zunächst auf Figur 6 verwiesen, in welcher ein an sich bekanntes P&ID-Diagramm (Piping and Instrumentation Diagram) 1 dargestellt ist. Ein derartiges Diagramm, welches verfahrenstechnische und rohrleitungstechnische Abläufe abbildet und in welchem eine Vielzahl von Komponenten einer zu steuernden Anlage festgelegt sind, erstellt ein Verfahrenstechniker im Rahmen einer Anlagenplanung mit einem Software-Werkzeug eines Engineering-Systems. Die Komponenten können z. B. als Apparate, Tanks bzw. Behälter, Sensoren, Aktoren und/oder Rohrverbindungen ausgebildet sein. Im vorliegenden Ausführungsbeispiel besteht ein Teil einer Anlage aus drei Tanks 2, 3, 4, einer Pumpe 5, Sensoren zur Erfassung der Füllstände der Tanks 2, 3, 4, Zuflussleitungen mit diversen Verzweigungen, Aktoren (Ventile) sowie Sensoren zur Erfassung des Drucks und des Durchflusses. Zur näheren Erläuterung der Erfindung wird im vorliegenden Ausführungsbeispiel lediglich Bezug genommen auf den Tank 3, die Pumpe 5, (Füllstands-) Sensoren 6, 7 sowie Ventile 8a, 8b, 9.

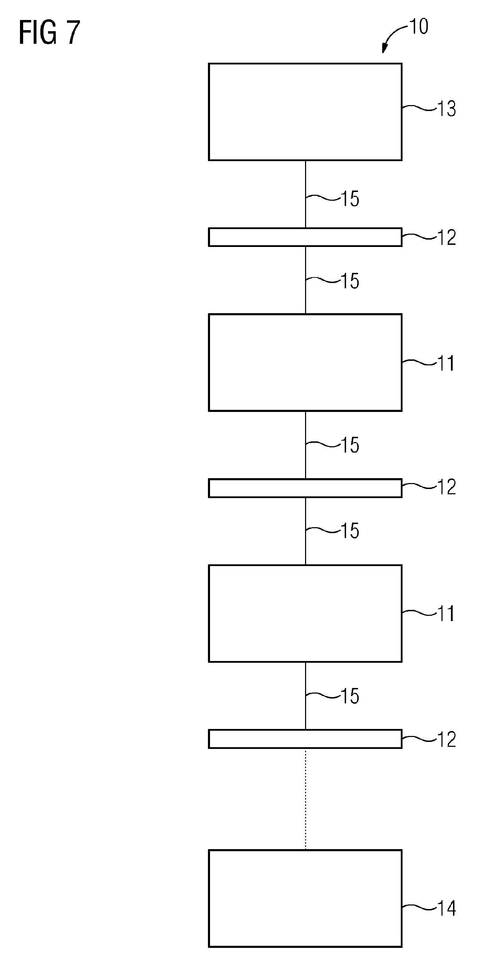

In Figur 7 ist eine an sich bekannte einfache, unverzweigte Schrittkette (Sequential Function Chart) 10 dargestellt, die eine alternierende Aneinanderreihung von Schritten 11 und Transitionen 12 umfasst. Eine derartige Schrittkette 10 erstellt ein Automatisierungstechniker mittels eines auf einem Engineering-System ablauffähigem Schrittketten-Editor (SFC-Editor). Die Schritte 11 lösen jeweils bestimmte Aktionen aus, die Transitionen 12 veranlassen jeweils einen Wechsel von einem Schritt 11 in einen anderen, sobald eine entsprechende Weiterschaltbedingung erfüllt ist. Die Schrittkette 10 umfasst ferner einen Start-Schritt 13 als Einstiegspunkt und einen Ende-Schritt 14, welcher die Schrittkette 10 beendet, wobei die Schritte 11, 13, 14 jeweils über gerichtete Kanten 15 über die zwischengeschalteten Transitionen 12 miteinander verbunden sind. Selbstverständlich sind für die Fällen, in denen es aus Prozesssicht erforderlich ist, zur Programmlaufzeit auf verschiedene Ereignisse zu reagieren, hier nicht dargestellte Alternativverzweigungen vorgesehen. Ferner sind ebenfalls hier nicht dargestellte Parallelverzweigungen für die Fälle vorgesehen, in denen nach einem Schritt mehrere Folgeschritte gleichzeitig zu verarbeiten sind.

Um dem Automatisierungstechniker "abstrakte" Schrittketten bereitzustellen, welche der Automatisierungstechniker im Sinne der Automatisierung weiterverarbeiten und optimieren kann, ist sowohl ein Software-Werkzeug, mittels welchem der Verfahrenstechniker eine Vielzahl von Komponenten der zu steuernden Anlage im Rahmen der Anlagenplanung festlegt, als auch ein Schrittketten-Editor, der Bestandteil des Software-Werkzeugs sein kann, in einer geeigneten Art und Weise ausgebildet.

Zur näheren Erläuterung wird dazu im Folgenden auf die Figuren 1 bis 5 Bezug genommen. Mittels des Software-Werkzeugs, welches mit dem Schrittketten-Editor interagiert, werden nach den Vorgaben eines Anwenders komponentenspezifische Zustände für eine erste Anzahl der Komponenten der Anlage definiert. Die definierten Zustände beschreiben Zustände, welche die Komponenten der ersten Anzahl aus Prozesssicht annehmen können. Im vorliegenden Ausführungsbeispiel sind zur Veranschaulichung für die Sensoren 6, 7 jeweilige Füllstände 16, 17 des Tanks 3 definiert (Figur 1). Ferner werden mittels des Software-Werkzeugs für eine zweite Anzahl der Komponenten komponentenspezifische Kommandos definiert, welche durch diese Komponenten ausführbar sind bzw. welche die Komponenten ausführen können. Im vorliegenden Beispiel sind für die Pumpe 5 Kommandos 18, 19 ("Pumpe an", "Pumpe aus") und für die Ventile 8a, 8b, 9 Kommandos 20 bis 24 ("Ventil zu", "Ventil auf") definiert.

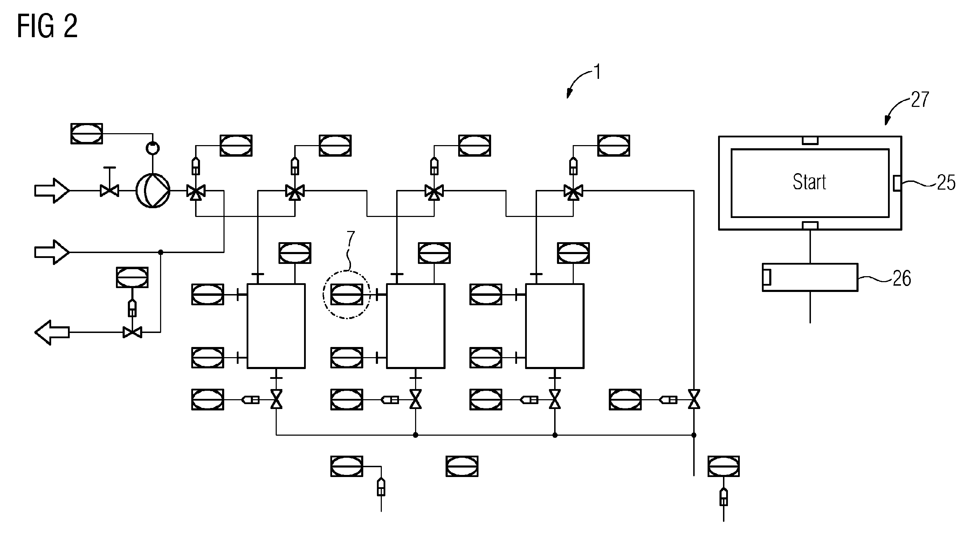

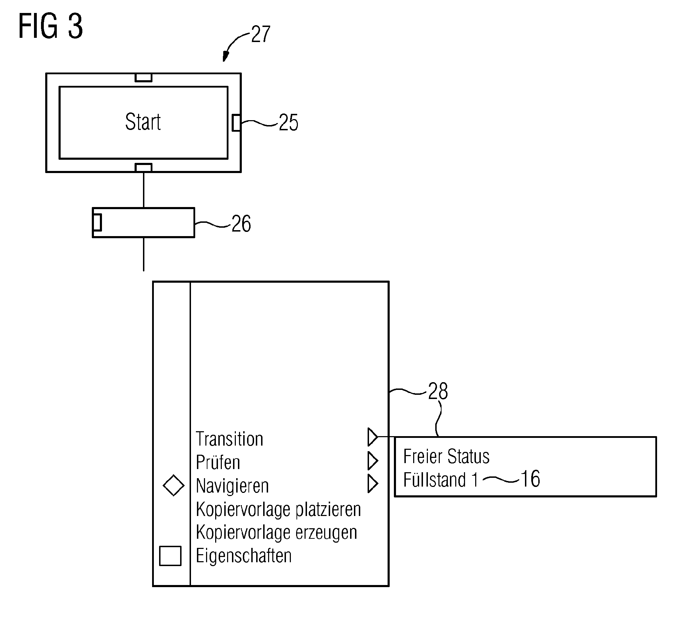

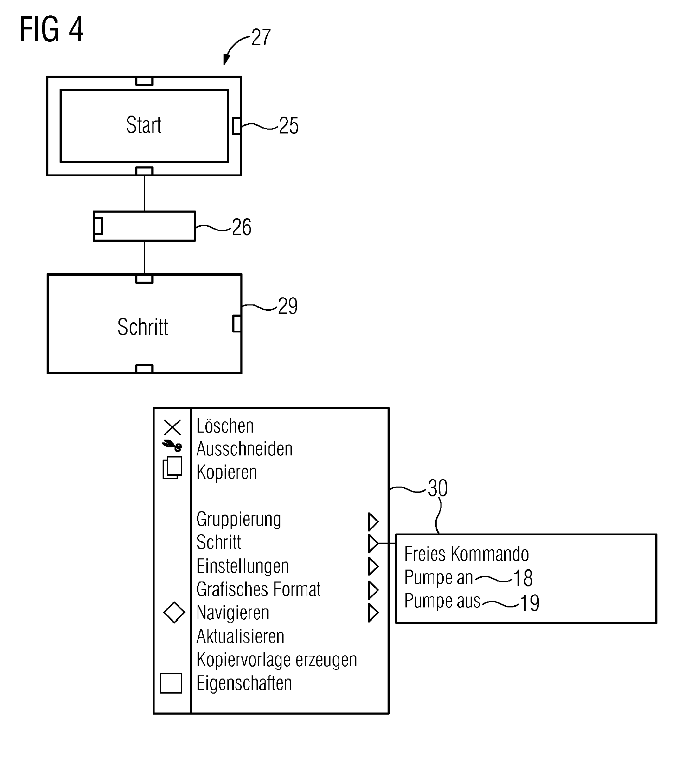

Einem Verfahrenstechniker wird mittels des Schrittketten-Editors ein Start-Schritt 25 und eine Transition 26 einer Schrittkette 27 neben dem P&ID-Diagramm 1 angezeigt (Figur 2), wobei der Schrittketten-Editor für den Fall, dass der Verfahrenstechniker den Sensor 7 im Diagramm 1 selektiertin Figur 1 mittels eines gestrichelt gezeichneten Kreises angedeutet -, dieser Transition 26 ein Auswahlfeld 28 einblendet (Figur 3). Aus diesem Auswahlfeld 28 kann der Verfahrenstechniker für den selektierten Sensor 7 des Tanks 3 den Füllstand 16 auswählen. Für den Fall, dass der Verfahrenstechniker den Zustand 16 (Füllstand 1) ausgewählt hat, verbindet der Schrittketten-Editor über eine Kante die Transition 26 mit einem Schritt 29 (Figur 4) und blendet ein weiteres Auswahlfeld 30 ein, mittels welchem der Verfahrenstechniker eines der Kommandos 18, 19 ("Pumpe an", "Pumpe aus") selektieren kann.

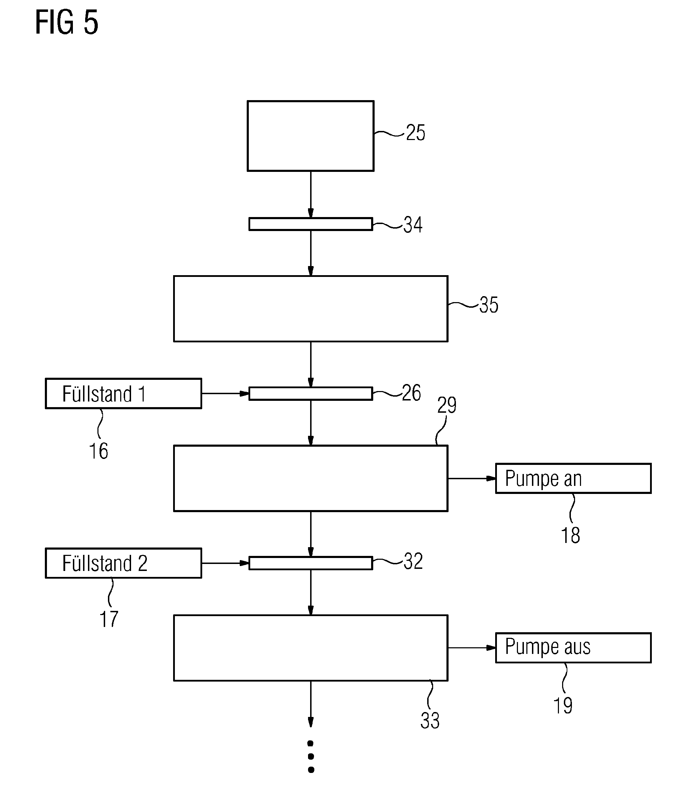

In der beschriebenen Art und Weise werden dem Verfahrenstechniker abwechselnd weitere Transitionen und Schritte bereitgestellt, wobei der Verfahrenstechniker zu jeder Transition und zu jedem weiteren Schritt eine weitere Komponente der ersten und zweiten Anzahl im Diagramm 1 selektieren kann. Selbstverständlich muss eine weitere selektierte Komponente im Kontext zu den bereits selektierten Komponenten stehen. Für den Fall, dass z. B. nach dem Schritt 29 der Schrittketten-Editor eine weitere Transition bereitstellt und der Verfahrenstechniker einen Sensor 31 (Figur 1) des Tanks 4 im Diagramm 1 anwählt, so meldet der Schrittketten-Editor einen Fehler, weil dieser Sensor 31 nicht im Kontext zu den zuvor ausgewählten Komponenten 5 und 7 steht. Im vorliegenden Ausführungsbeispiel ist an den Schritt 29 eine weitere Transition 32 (Figur 5) angefügt, wobei im Diagramm 1 der Sensor 6 selektiert und der Zustand 17 (Füllstand 2) in einem hier nicht dargestellten weiteren Auswahlfeld als Weiterschaltbedingung ausgewählt wurde. Ferner ist an diese Transition 32 ein weiterer Schritt 33 angefügt und das Kommando 19 (Pumpe aus) selektiert.

Der Software-Editor ist ferner derart ausgebildet, in einem Einfügemodus zwischen angezeigten Schritten und Transitionen weitere Transitionen und weitere Schritte einzufügen. Im vorliegenden Beispiel sind zwischen dem Start-Schritt 25 und der Transition 26 der Schrittkette 27 eine weitere Transition 34 und ein weiterer Schritt 35 eingefügt.

Die durch den Verfahrenstechniker erstellte "verfahrenstechnische" bzw. "abstrakte" Schrittkette 27 wird dem Automatisierungstechniker bereitgestellt, der die Schrittkette 27 mittels des Schrittketten-Editors im Sinne der Automatisierung weiterverarbeiten und an eine konkrete Automatisierungs-Hardware (Automatisierungsgeräte, Feldgeräte, Regler-Bausteine, ...) anpassen kann. Insbesondere sind Parameter bezüglich Signalqualitäten, Übertragungseigenschaften zwischen Automatisierungskomponenten sowie automatisierungsgerätspezifische Parameter an den Baustein-Ein- und/oder Ausgängen (Operations-Bausteinnummern, Zykluszeit) im Rahmen der Weiterverarbeitung und Optimierung der Schrittkette 27 anzupassen.

## Patentansprüche

1. Verfahren zum Betreiben eines Engineering-Systems, welches ein Software-Werkzeug zum Festlegen einer Vielzahl von Komponenten (2 bis 9) einer zu steuernden Anlage im Rahmen einer Anlagenplanung aufweist, wobei die Komponenten (2 bis 9) und verfahrenstechnischen Abläufe in einem auf einer Anzeigeeinheit darstellbaren Diagramm (1) abgebildet werden, **gekennzeichnet durch** folgende Verfahrensschritte:
a) es werden für eine erste Anzahl der Komponenten (6, 7) komponentenspezifische Zustände (16, 17) definiert,
b) es werden für eine zweite Anzahl der Komponenten (5, 8a, 8b, 9) komponentenspezifische Kommandos (18 bis 25) definiert, die **durch** die Komponenten (5, 8a, 8b, 9) ausführbar sind,
c) einem Anwender wird ein mit dem Software-Werkzeug interagierender Schrittketten-Editor zum Erstellen einer mindestens eine Transition (26) und mindestens einen Schritt (29) umfassenden auf einer Anzeigeeinheit darstellbaren Schrittkette (27) bereitgestellt,
d) mittels des Schrittketten-Editors wird dem Anwender bereitgestellt
e) eine Transition (26) zum Anfügen an einen Schritt (25, 29), wobei für den Fall, dass eine der angezeigten Komponenten (6, 7) der ersten Anzahl im Diagramm (1) selektiert wird, die für diese Komponente (6, 7) definierten Zustände (16, 17) zur Auswahl angezeigt werden, von denen mindestens ein Zustand (16, 17) als Weiterschaltbedingung für die Transition (26) selektierbar ist,
f) ein Schritt (29) zum Anfügen an die Transition (26), wobei für den Fall, dass eine der angezeigten Komponenten (5, 8a, 8b, 9) der zweiten Anzahl im Diagramm (1) selektiert wird, die für diese Komponente (5, 8a, 8b, 9) definierten Kommandos (18 bis 25) zur Auswahl angezeigt werden, von denen mindestens ein Kommando (18 bis 25) selektierbar ist.

2. Verfahren nach Anspruch 1, **gekennzeichnet durch** Wiederholen der Verfahrensschritte e) und f) bis zu einem Ende-Schritt.

3. Engineering-System mit einem Software-Werkzeug zum Festlegen einer Vielzahl von Komponenten (2 bis 9) einer zu steuernden Anlage im Rahmen einer Anlagenplanung, wobei das Software-Werkzeug dazu ausgebildet ist, die Komponenten (2 bis 9) und verfahrenstechnischen Abläufe in einem auf einer Anzeigeeinheit darstellbaren Diagramm (1) abzubilden, **dadurch gekennzeichnet, dass**
a) das Software-Werkzeug dazu ausgebildet ist, für eine erste Anzahl der Komponenten (6, 7) komponentenspezifische Zustände (16, 17) und für eine zweite Anzahl der Komponenten (5, 8a, 8b, 9) komponentenspezifische Kommandos (18 bis 25) zu definieren, die durch die Komponenten (5, 8a, 8b, 9) der zweiten Auswahl ausführbar sind,
b) das Software-Werkzeug dazu ausgebildet ist, mit einem Schrittketten-Editor zum Erstellen einer mindestens eine Transition (26) und mindestens einen Schritt (29) umfassenden auf einer Anzeigeeinheit darstellbaren Schrittkette (27) zu interagieren,
c) der Schrittketten-Editor dazu ausgebildet ist, einem Anwender eine Transition (26) zum Anfügen an einen Schritt (25, 29) bereitzustellen, und ferner dazu ausgebildet ist, für den Fall, dass eine der angezeigten Komponenten (6, 7) der ersten Anzahl im Diagramm (1) selektiert wird, die für diese Komponente (6, 7) definierten Zustände (16, 17) zur Auswahl anzuzeigen, von denen mindestens ein Zustand (16, 17) als Weiterschaltbedingung für die Transition (26) selektierbar ist,
d) der Schrittketten-Editor dazu ausgebildet ist, dem Anwender einen Schritt (29) zum Anfügen an die Transition (26) bereitzustellen, und ferner dazu ausgebildet ist, für den Fall, dass eine der angezeigten Komponenten (5, 8a, 8b, 9) der zweiten Anzahl im Diagramm (1) selektiert wird, die für diese Komponente (5, 8a, 8b, 9) definierten Kommandos (18 bis 25) zur Auswahl anzuzeigen, von denen mindestens ein Kommando (18 bis 25) selektierbar ist.
